# EUROPEAN PATENT SPECIFICATION

(11) **EP 4 000 979 B1**
(45) Date of publication and mention of the grant of the patent: **16.08.2023**
(21) Application number: 21206047.9
(22) Date of filing: 02.11.2021
(51) Int. Cl.: B60K 6/48, B60W 10/06, B60W 10/08, B60W 20/15, B60L 50/00

(54) **CONTROL DEVICE FOR HYBRID VEHICLE**
STEUERUNGSVORRICHTUNG FÜR HYBRIDFAHRZEUG
DISPOSITIF DE COMMANDE POUR VÉHICULE HYBRIDE

(30) Priority: 12.11.2020 JP 2020188764
(43) Date of publication of application: 25.05.2022
(73) Proprietor: Suzuki Motor Corporation, Shizuoka 432-8611 (JP)
(72) Inventor: Sato, Yuki, Shizuoka, 432-8611 (JP)
(74) Representative: Henkel & Partner mbB

(56) References cited:
- JP-A- 2007 045 325
- JP-A- 2010 241 361
- US-A1- 2004 235 613

## Description

### [Technical Field]

The present invention relates to a control device for a hybrid vehicle.

### [Background Art]

Patent Literature 1 discloses a technique that starts an engine when a motor is locked while the engine is stopped and increases torque transmitted to driving wheels to thereby release the motor lock.

Patent Literature 2 discloses that when the temperature of an inverter exceeds a preset torque restriction start temperature, or the temperature of a motor generator exceeds the preset torque restriction start temperature, the torque restriction of the motor generator is started, and temperature rise values of the inverter and the motor generator at the time of starting an engine are estimated. When the temperature of the inverter reaches an engine start limit temperature obtained by subtracting the inverter temperature rise value from the torque restriction start temperature during the idle stop of the engine, or when the temperature of the motor generator reaches an engine start limit temperature obtained by subtracting the motor generator temperature rise value from the torque restriction start temperature during it, the idle stop is released to start the engine.

It is generally known that when a motor lock state continues, a current concentrates on a specific phase of a switching element of an inverter and the switching element becomes overheated.

### [Citation List]

### [Patent Literature]

[Patent Literature 1] JP2013-193557A
[Patent Literature 2] JP2007-045325A

### [Summary of Invention]

### [Technical Problem]

However, since a temperature rise of the switching element suddenly occurs, even when the motor lock is released after determining the motor lock as described in Patent Literature 1 while the temperature of the switching element is high, the switching element becomes overheated, and it may be impossible to further protect the switching element.

It is therefore an objective of the present invention to provide a control device for a hybrid vehicle that can prevent a switching element from becoming overheated even when a motor is driven while the temperature of the switching element is high.

### [Solution to Problem]

In order to solve the above-described problem, there is provided a control device for a hybrid vehicle as set out in independent claim 1. Advantageous developments are defined in the dependent claims.

### [Advantageous Effect of Invention]

Thus, according to the present invention, it is possible to prevent the switching element from becoming overheated even when the motor is driven while the temperature of the switching element is high.

### [Brief Description of Drawings]

[Figure 1] Figure 1 is a schematic configuration diagram of a hybrid vehicle according to an embodiment of the present invention.
[Figure 2] Figure 2 is a block diagram of an inverter for a hybrid vehicle according to the embodiment of the present invention.
[Figure 3] Figure 3 is a flowchart illustrating a procedure of an overheat protection control process of a control device for a hybrid vehicle according to the embodiment of the present invention.
[Figure 4] Figure 4 shows time charts illustrating a change in a rotation speed and torque of a motor when the temperature of a switching element by the overheat protection control process of the control device for a hybrid vehicle according to the embodiment of the present invention is higher than a first threshold.
[Figure 5] Figure 5 shows time charts illustrating a change in the rotation speed and torque of the motor when the temperature of the switching element by the overheat protection control process of the control device for a hybrid vehicle according to the embodiment of the present invention is higher than a second threshold.

### [Description of Embodiment]

A control device for a hybrid vehicle according to an embodiment of the present invention is a control device for a hybrid vehicle including an engine, a motor, an inverter that supplies AC electric power to the motor using a switching element and a temperature detection unit that detects a temperature of the switching element, the control device including a control unit that starts driving the engine if the temperature of the switching element is equal to or higher than a predetermined temperature at the start of driving the motor.

Thus, the control device for a hybrid vehicle according to the embodiment of the present invention can prevent a switching element from becoming overheated even when the motor is driven while the temperature of the switching element is high.

### [Embodiment]

Hereinafter, a hybrid vehicle equipped with a control device according to an embodiment of the present invention will be described in detail with reference to the accompanying drawings.

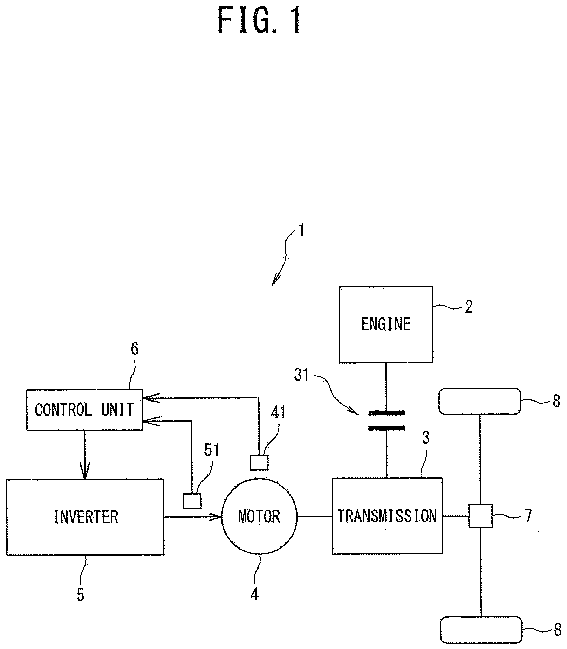

In Figure 1, a hybrid vehicle 1 according to an embodiment of the present invention includes an engine 2, a transmission 3, a motor 4, an inverter 5, and a control unit 6.

A plurality of cylinders are formed in the engine 2. In the present embodiment, the engine 2 is configured to perform a series of four strokes: intake stroke, compression stroke, expansion stroke and exhaust stroke, on each cylinder.

The transmission 3 shifts the rotation output from the engine 2 and drives left and right driving wheels 8 via a differential 7. The transmission 3 is provided with a constant mesh transmission mechanism (not shown) made up of a parallel shaft gear mechanism and an actuator (not shown).

A dry type single plate clutch 31 is provided between the engine 2 and the transmission 3, and the clutch 31 connects or disconnects power transmission between the engine 2 and the transmission 3.

The transmission 3 is constructed as a so-called AMT (automated manual transmission), and gear shift in the transmission mechanism and engagement/disengagement of the clutch 31 are performed by the actuator (not shown).

The motor 4 has a function as an electric motor driven by electric power supplied from a battery (not shown) via the inverter 5 and a function as a generator that regenerates power by reverse driving force input from the differential 7. An output shaft of the motor 4 is connected to an output shaft of the transmission 3.

The motor 4 is provided with a rotation sensor 41 that detects a rotation speed of the motor 4. The rotation sensor 41 is connected to the control unit 6.

The inverter 5 converts DC electric power supplied from a battery under control of the control unit 6 to three-phase AC electric power and supplies the AC electric power to the motor 4 or converts three-phase AC electric power generated by the motor 4 to DC electric power and charges the battery.

The inverter 5 is provided with a current sensor 51 that detects a current supplied from the inverter 5 to the motor 4. The current sensor 51 is connected to the control unit 6.

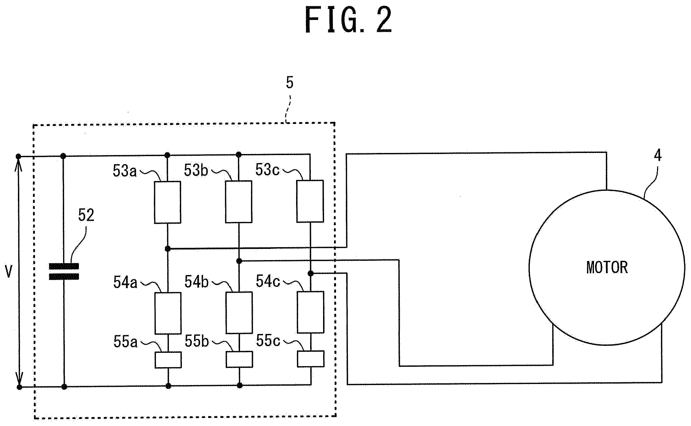

The inverter 5 includes a smoothing capacitor 52, switching elements 53a, 53b, 53c, 54a, 54b and 54c, and temperature sensors 55a, 55b and 55c as temperature detection units as shown in Figure 2.

The smoothing capacitor 52 is designed to smooth the voltage of DC electric power generated between the positive and negative electrodes.

The switching elements 53a, 53b, 53c, 54a, 54b and 54c generate three-phase AC electric power to be supplied to the motor 4.

The switching element 53a and the switching element 54a, the switching element 53b and the switching element 54b, and the switching element 53c and the switching element 54c each generate one-phase AC electric power.

The temperature sensors 55a, 55b and 55c each detect the temperature of each phase switching element.

The inverter 5 controls the switching elements 53a, 53b, 53c, 54a, 54b and 54c to thereby control three-phase AC electric power to be supplied to the motor 4.

In Figure 1, the control unit 6 is constructed of a computer unit provided with a CPU (central processing unit), RAM (random access memory), ROM (read only memory), a flash memory that saves backup data or the like, an input port, and an output port.

The ROM of the computer unit stores various constants and various maps or the like, and a program to cause the computer unit to function as the control unit 6.

That is, the CPU executes the program stored in the ROM using the RAM as a work area, and the computer unit thereby functions as the control unit 6 according to the present embodiment.

Various sensors including the aforementioned rotation sensor 41 and current sensor 51 are connected to the input port of the control unit 6.

On the other hand, in addition to the aforementioned inverter 5 and the actuator of the transmission 3, various control targets including an injector (not shown) are connected to the output port of the control unit 6.

In the present embodiment, when the temperature of the switching element 53a, 53b, 53c, 54a, 54b or 54c detected by the temperature sensor 55a, 55b or 55c at the start of driving the motor 4 is equal to or higher than a predetermined temperature, the control unit 6 causes the engine 2 to start.

When the temperature of the switching element 53a, 53b, 53c, 54a, 54b or 54c at the start of driving the motor 4 is equal to or higher than a first predetermined temperature, the control unit 6 causes the engine 2 to start.

When the temperature of the switching element 53a, 53b, 53c, 54a, 54b or 54c at the start of driving the motor 4 is equal to or higher than a second predetermined temperature higher than the first predetermined temperature, the control unit 6 causes the engine 2 to start and restricts the torque of the motor 4.

The control unit 6 restricts the torque of the motor 4, for example, in two stages. In a first stage, the control unit 6 restricts the torque of the motor 4 to a first torque limit value. If the temperature of the switching element 53a, 53b, 53c, 54a, 54b or 54c does not fall below the second predetermined temperature even with the restriction in the first stage, the control unit 6 restricts the torque of the motor 4 to a second torque limit value lower than the first torque limit value.

If a state in which the temperature of the switching element 53a, 53b, 53c, 54a, 54b or 54c does not fall below the second predetermined temperature even with the restriction in the first stage continues for a predetermined time, the control unit 6 may restrict the torque of the motor 4 to a second torque limit value.

When starting to run the hybrid vehicle 1 using the motor 4, if the temperature of the switching element 53a, 53b, 53c, 54a, 54b or 54c is equal to or higher than a predetermined temperature, the control unit 6 causes the engine 2 as a drive source to start to run the hybrid vehicle 1.

When starting to decelerate the hybrid vehicle 1 using the motor 4, if the temperature of the switching element 53a, 53b, 53c, 54a, 54b or 54c is equal to or higher than the predetermined temperature, the control unit 6 causes the engine 2 as a drive source to run the hybrid vehicle 1.

At the start of driving the motor 4, if a state in which the temperature of the switching element 53a, 53b, 53c, 54a, 54b or 54c is equal to or higher than the predetermined temperature continues until the rotation speed of the motor 4 becomes a predetermined rotation speed or more, the control unit 6 may start the engine 2.

For example, when a predetermined determination condition is met, the control unit 6 determines the temperature of the switching element 53a, 53b, 53c, 54a, 54b or 54c.

Examples of the determination condition include: that the rotation speed of the motor 4 is equal to or less than a predetermined rotation speed of the motor; and that the torque of the motor 4 is equal to or greater than a predetermined motor torque, all of which are assumed to have been met as the determination condition.

The control unit 6 starts the engine 2, for example, when the predetermined determination condition is met and a state in which the temperature of the switching element 53a, 53b, 53c, 54a, 54b or 54c is equal to or higher than the predetermined temperature continues for a predetermined determination time period.

When, for example, a predetermined restoration condition is met, the control unit 6 stops determining the temperature of the switching element 53a, 53b, 53c, 54a, 54b or 54c and stops the engine 2.

Examples of the restoration condition include: that the rotation speed of the motor 4 is equal to or greater than a predetermined restoration rotation speed; that the torque of the motor 4 is equal to or less than a predetermined restoration torque; and that the temperature of the switching element 53a, 53b, 53c, 54a, 54b or 54c is lower than a predetermined temperature, any one of, or a combination of some of these conditions, all of which are assumed to have been met as the restoration condition.

When, for example, a predetermined restoration condition has been met for a predetermined restoration determination time period, the control unit 6 stops the determination of the temperature of the switching element 53a, 53b, 53c, 54a, 54b or 54c and stops the engine 2.

The control unit 6 makes the aforementioned determination by designating a maximum value of the temperatures of the switching elements of the respective phases detected by the temperature sensor 55a, 55b or 55c as the temperature of the switching element 53a, 53b, 53c, 54a, 54b or 54c.

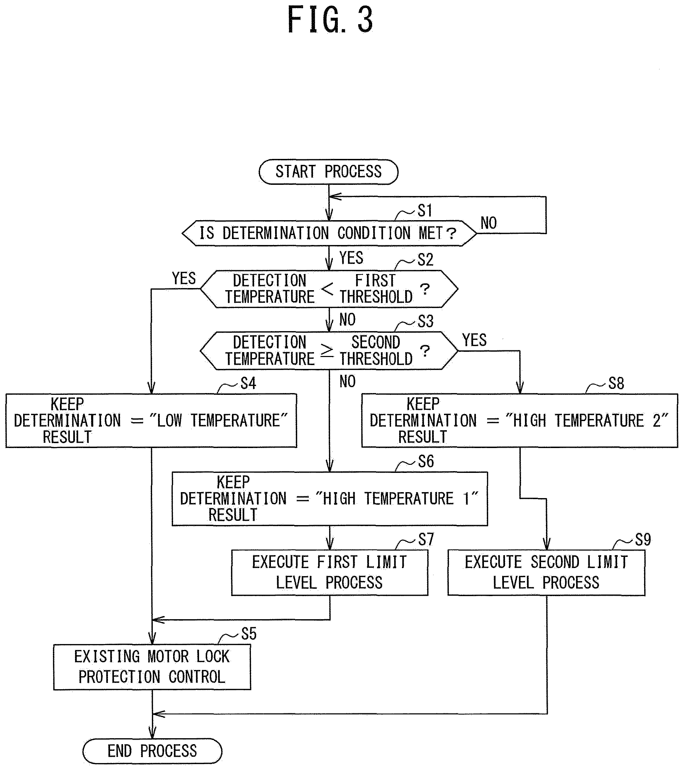

An overheat protection control process by the control device for a hybrid vehicle according to the present embodiment configured as described above will be described with reference to Figure 3. Note that the overheat protection control process described below starts when the control unit 6 starts operation and is executed at preset time intervals.

In step S1, the control unit 6 determines whether or not the aforementioned determination condition is met. When it is determined that the determination condition is met, the control unit 6 executes a process in step S2.

When it is determined that the determination condition is not met, the control unit 6 executes the process in step S1.

In step S2, the control unit 6 determines whether or not the detection temperature of the switching element 53a, 53b, 53c, 54a, 54b or 54c is lower than the first threshold as the first predetermined temperature. When it is determined that the detection temperature is lower than the first threshold, the control unit 6 executes a process in step S4.

When it is determined that the detection temperature is not lower than the first threshold, the control unit 6 executes a process in step S3.

In step S3, the control unit 6 determines whether or not the detection temperature of the switching element 53a, 53b, 53c, 54a, 54b or 54c is equal to or higher than a second threshold as the second predetermined temperature. When it is determined that the detection temperature is equal to or higher than the second threshold, the control unit 6 executes a process in step S8.

When it is determined that the detection temperature is not equal to or higher than the second threshold, the control unit 6 executes a process in step S6.

In step S4, the control unit 6 sets "low temperature" in the determination result. After executing the process in step S4, the control unit 6 executes a process in step S5.

In step S5, the control unit 6 executes an existing motor lock protection control process. After executing the process in step S5, the control unit 6 ends the overheat protection control process.

In step S6, the control unit 6 sets "high temperature 1" in the determination result. After executing the process in step S6, the control unit 6 executes a process in step S7.

In step S7, the control unit 6 starts the engine 2 as a first limit level process. After executing the process in step S7, the control unit 6 executes the process in step S5.

In step S8, the control unit 6 sets "high temperature 2" in the determination result. After executing the process in step S8, the control unit 6 executes a process in step S9.

In step S9, the control unit 6 starts the engine 2 and restricts the torque of the motor 4 as a second limit level process. After executing the process in step S9, the control unit 6 ends the overheat protection control process.

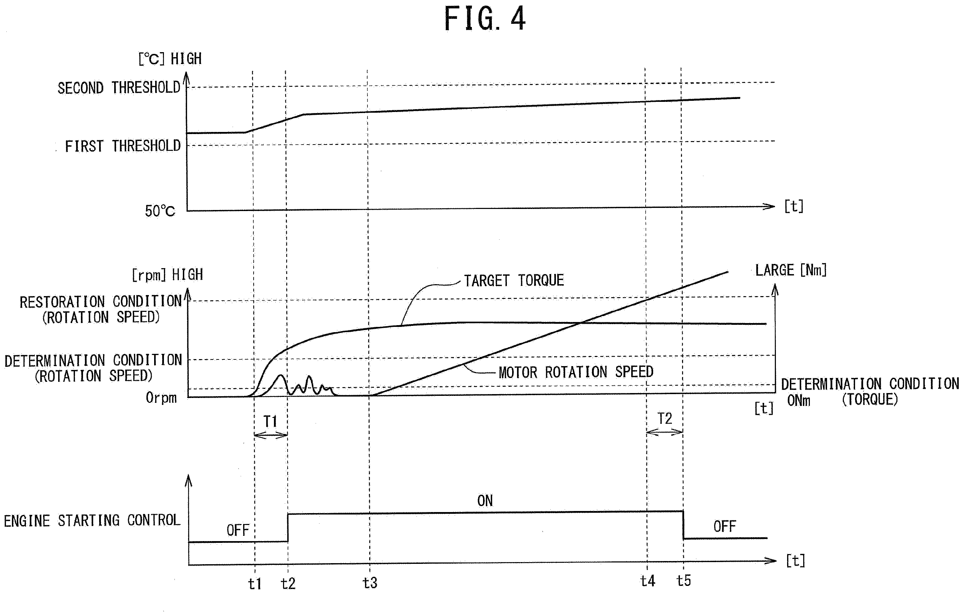

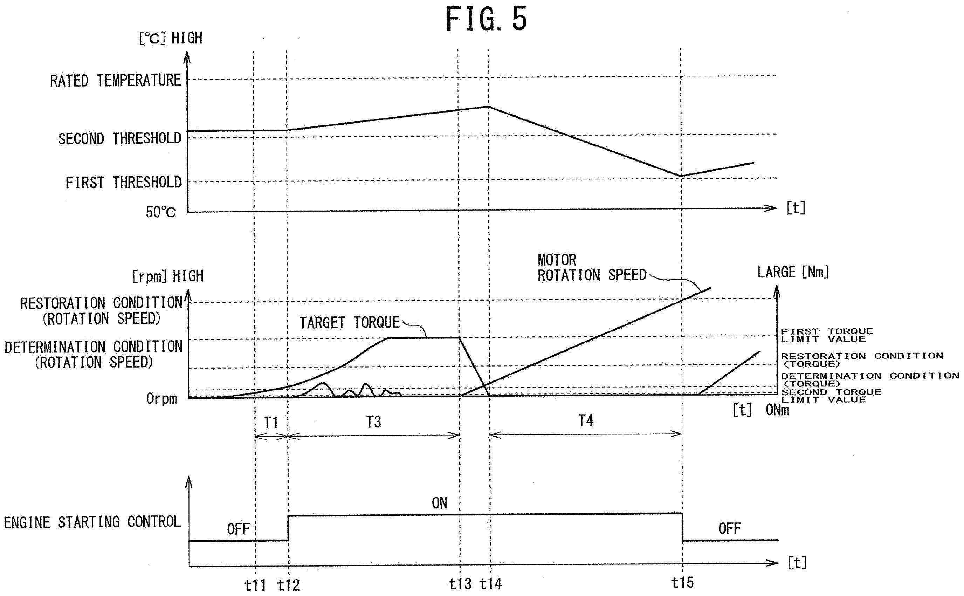

Operation of such an overheat protection control process will be described with reference to Figure 4 and Figure 5.

Figure 4 shows time charts when the detection temperature of the switching element 53a, 53b, 53c, 54a, 54b or 54c is equal to or higher than the first threshold.

At time t1, the determination condition according to the rotation speed and the torque of the motor 4 is met, and at time t2 after a determination time T1 elapses, engine starting control is turned on and the engine 2 starts.

At time t3, the rotation speed of the motor 4 starts increasing, at time t4, the restoration condition is met, and at time t5 after a restoration determination time T2 elapses, the engine starting control is turned off and the engine 2 is stopped.

Figure 5 shows time charts when the detection temperature of the switching element 53a, 53b, 53c, 54a, 54b or 54c is equal to or higher than the second threshold.

At time t11, the determination condition according to the rotation speed and the torque of the motor 4 is met, and at time t12 after the determination time T1 elapses, engine starting control is turned on, the engine 2 starts and the torque of the motor 4 is restricted to the first torque limit value.

After that, since the detection temperature of the switching element 53a, 53b, 53c, 54a, 54b or 54c is still equal to or higher than the second threshold at time t13 after a first torque restriction time T3 elapses, the torque of the motor 4 is restricted to a second torque limit value and the rotation speed of the motor 4 starts increasing.

At time t14, when the torque of the motor 4 becomes the second torque limit value or less, a second torque restriction period T4 starts, and at time t15, the rotation speed of the motor 4 becomes the restoration rotation speed or more, the engine starting control is turned off, the engine 2 is stopped, and the operation is ended.

Thus, in the present embodiment, at the start of driving the motor 4, if the temperature of the switching element 53a, 53b, 53c, 54a, 54b or 54c detected by the temperature sensor 55a, 55b or 55c is equal to or higher than the predetermined temperature, the control unit 6 starts the engine 2.

When the temperature of the switching element 53a, 53b, 53c, 54a, 54b or 54c is equal to or higher than the predetermined temperature, by starting the engine 2, it is possible to suppress a temperature rise of the switching element 53a, 53b, 53c, 54a, 54b or 54c before a motor lock state is determined and thereby prevent the switching elements 53a, 53b, 53c, 54a, 54b and 54c from becoming overheated.

At the start of driving the motor 4, if the temperature of the switching element 53a, 53b, 53c, 54a, 54b or 54c is equal to or higher than the first predetermined temperature, the control unit 6 starts the engine 2 and if the temperature of the switching element 53a, 53b, 53c, 54a, 54b or 54c is equal to or higher than the second predetermined temperature higher than the first predetermined temperature, the control unit 6 starts the engine 2 and restricts the torque of the motor 4.

When the temperature of the switching element 53a, 53b, 53c, 54a, 54b or 54c is equal to or higher than the second predetermined temperature higher than the first predetermined temperature, it is possible to further prevent the switching elements 53a, 53b, 53c, 54a, 54b and 54c from becoming overheated by restricting the torque of the motor 4 in addition to starting the engine 2.

When starting to run the hybrid vehicle 1 using the motor 4, if the temperature of the switching element 53a, 53b, 53c, 54a, 54b or 54c is equal to or higher than the predetermined temperature, the control unit 6 starts running the hybrid vehicle 1 using the engine 2 as a drive source.

When starting to run the hybrid vehicle 1 using the motor 4, by starting to run the hybrid vehicle 1 using the engine 2 as the drive source if the temperature of the switching element 53a, 53b, 53c, 54a, 54b or 54c is equal to or higher than the predetermined temperature, it is possible to suppress a temperature rise in the switching element 53a, 53b, 53c, 54a, 54b or 54c before a motor lock state is determined, and thereby prevent the switching elements 53a, 53b, 53c, 54a, 54b and 54c from becoming overheated.

When starting to decelerate the hybrid vehicle 1 using the motor 4, if the temperature of the switching element 53a, 53b, 53c, 54a, 54b or 54c is equal to or higher than the predetermined temperature, the control unit 6 causes the hybrid vehicle 1 to run using the engine 2 as the drive source.

When starting to decelerate the hybrid vehicle 1 using the motor 4, if the temperature of the switching element 53a, 53b, 53c, 54a, 54b or 54c is equal to or higher than the predetermined temperature, by causing the hybrid vehicle 1 to run using the engine 2 as the drive source, it is possible to suppress a temperature rise in the switching element 53a, 53b, 53c, 54a, 54b or 54c before a motor lock state is determined, and thereby prevent the switching elements 53a, 53b, 53c, 54a, 54b and 54c from becoming overheated.

At the start of driving the motor 4, if a state in which the temperature of the switching element 53a, 53b, 53c, 54a, 54b or 54c is equal to or higher than the predetermined temperature continues until the rotation speed of the motor 4 becomes a predetermined rotation speed or more, the control unit 6 causes the engine 2 to start.

When the temperature of the switching element 53a, 53b, 53c, 54a, 54b or 54c is equal to or higher than the predetermined temperature, if the determination is made immediately, there is a possibility of an erroneous determination to start the engine 2 more than necessary.

For this reason, when a state in which the temperature of the switching element 53a, 53b, 53c, 54a, 54b or 54c is equal to or higher than the predetermined temperature continues until the rotation speed of the motor 4 becomes a predetermined rotation speed or more, by making the determination to start the engine 2, it is possible to prevent the switching element 53a, 53b, 53c, 54a, 54b, 54c from becoming overheated while preventing an erroneous determination.

Although a case has been described in the present embodiment where the control unit 6 performs various determinations and calculations based on various sensor information, without being limited to this, the hybrid vehicle 1 may be provided with a communication unit that can communicate with an external apparatus such as an external server, the external apparatus may perform various determinations and calculations based on detection information of various sensors transmitted from the communication unit, the communication unit may receive the determination results or calculation results, and various kinds of control may be performed using the received determination results and calculation results.

### [Reference Signs List]

1...hybrid vehicle, 2...engine, 4...motor, 5...inverter, 6...control unit, 53a, 53b, 53c, 54a, 54b, 54c... switching element, 55a, 55b, 55c... temperature sensor (temperature detection unit)

## Claims

1. A control device for a hybrid vehicle (1) comprising an engine (2), a motor (4), an inverter (5) that supplies AC electric power to the motor (4) using a switching element (53a, 53b, 53c, 54a, 54b, 54c), and a temperature detection unit (55a, 55b, 55c) that detects a temperature of the switching element (53a, 53b, 53c, 54a, 54b, 54c),
the control device comprising a control unit (6) that starts driving the engine (2) at a start of driving the motor (4) if the temperature of the switching element (53a, 53b, 53c, 54a, 54b, 54c) is equal to or higher than a predetermined temperature,
wherein at the start of driving the motor (4), the control unit (6) starts the engine (2) if the temperature of the switching element (53a, 53b, 53c, 54a, 54b, 54c) is equal to or higher than a first predetermined temperature,
**characterized in that** at start of driving the motor (4), the control unit (6) starts
the engine (2) and restricts torque of the motor (4) if the temperature of the switching element (53a, 53b, 53c, 54a, 54b, 54c) is equal to or higher than a second predetermined temperature higher than the first predetermined temperature.

2. The control device for the hybrid vehicle (1) according to claim 1, wherein when starting to run the hybrid vehicle (1) using the motor (4), the control unit (6) causes the hybrid vehicle (1) to start running using the engine (2) as a drive source if the temperature of the switching element (53a, 53b, 53c, 54a, 54b, 54c) is equal to or higher than the predetermined temperature.

3. The control device for the hybrid vehicle (1) according to claim 1, wherein when starting to decelerate the hybrid vehicle (1) using the motor (4), the control unit (6) causes the hybrid vehicle (1) to run using the engine (2) as a drive source if the temperature of the switching element (53a, 53b, 53c, 54a, 54b, 54c) is equal to or higher than the predetermined temperature.

4. The control device for the hybrid vehicle (1) according to any one of claims 1 to 3, wherein at the start of driving the motor (4), the control unit (6) starts the engine (2) if a state in which the temperature of the switching element (53a, 53b, 53c, 54a, 54b, 54c) is equal to or higher than the predetermined temperature continues until a rotation speed of the motor (4) becomes a predetermined rotation speed or more.

## Patentansprüche

1. Eine Steuervorrichtung für ein Hybridfahrzeug (1) mit einem Verbrennungsmotor (2), einem Motor (4), einem Wechselrichter (5), der den Motor (4) unter Verwendung eines Schaltelements (53a, 53b, 53c, 54a, 54b, 54c) mit elektrischem Wechselstrom versorgt, und einer Temperaturerfassungseinheit (55a, 55b, 55c), die eine Temperatur des Schaltelements (53a, 53b, 53c, 54a, 54b, 54c) erfasst,
wobei die Steuervorrichtung eine Steuereinheit (6) aufweist, die ein Antreiben des Verbrennungsmotors (2) bei einem Starten eines Antreibens des Motors (4) startet, falls die Temperatur des Schaltelements (53a, 53b, 53c, 54a, 54b, 54c) gleich oder höher als eine vorbestimmte Temperatur ist,
wobei beim Starten des Antreibens des Motors (4) die Steuereinheit (6) den Verbrennungsmotor (2) startet, falls die Temperatur des Schaltelements (53a, 53b, 53c, 54a, 54b, 54c) gleich oder höher als eine erste vorbestimmte Temperatur ist,
**dadurch gekennzeichnet, dass** beim Starten des Antreibens des Motors (4) die Steuereinheit (6) den Verbrennungsmotor (2) startet und das Drehmoment des Motors (4) begrenzt, falls die Temperatur des Schaltelements (53a, 53b, 53c, 54a, 54b, 54c) gleich oder höher als eine zweite vorbestimmte Temperatur ist, die höher als die erste vorbestimmte Temperatur ist.

2. Die Steuervorrichtung für das Hybridfahrzeug (1) nach Anspruch 1, wobei die Steuereinheit (6) beim Starten des Hybridfahrzeugs (1) unter Verwendung des Motors (4) bewirkt, dass das Hybridfahrzeug (1) unter Verwendung des Verbrennungsmotors (2) als Antriebsquelle zu fahren beginnt, falls die Temperatur des Schaltelements (53a, 53b, 53c, 54a, 54b, 54c) gleich oder höher als die vorbestimmte Temperatur ist.

3. Die Steuervorrichtung für das Hybridfahrzeug (1) nach Anspruch 1, wobei die Steuereinheit (6) beim Starten eines Abbremsens des Hybridfahrzeugs (1) unter Verwendung des Motors (4) bewirkt, dass das Hybridfahrzeug (1) unter Verwendung des Verbrennungsmotors (2) als Antriebsquelle fährt, falls die Temperatur des Schaltelements (53a, 53b, 53c, 54a, 54b, 54c) gleich oder höher als die vorbestimmte Temperatur ist.

4. Die Steuervorrichtung für das Hybridfahrzeug (1) nach einem der Ansprüche 1 bis 3, wobei die Steuereinheit (6) beim Starten des Antreibens des Motors (4) den Verbrennungsmotor (2) startet, falls ein Zustand, in dem die Temperatur des Schaltelements (53a, 53b, 53c, 54a, 54b, 54c) gleich oder höher als die vorbestimmte Temperatur ist, anhält, bis eine Drehzahl des Motors (4) eine vorbestimmte Drehzahl oder mehr erreicht.

## Revendications

1. Dispositif de commande pour un véhicule hybride (1) comprenant un moteur (2), un moteur-générateur (4), un onduleur (5) qui fournit une énergie électrique à courant alternatif au moteur-générateur (4) à l'aide d'un élément de commutation (53a, 53b, 53c, 54a, 54b, 54c), et une unité de détection de température (55a, 55b, 55c) qui détecte une température de l'élément de commutation (53a, 53b, 53c, 54a, 54b, 54c),
le dispositif de commande comprenant une unité de commande (6) qui commence à entraîner le moteur (2) lors du démarrage de l'entraînement du moteur-générateur (4) si la température de l'élément de commutation (53a, 53b, 53c, 54a, 54b, 54c) est égale ou supérieure à une température prédéterminée,
dans lequel lors du démarrage de l'entraînement du moteur-générateur (4), l'unité de commande (6) démarre le moteur (2) si la température de l'élément de commutation (53a, 53b, 53c, 54a, 54b, 54c) est égale ou supérieure à une première température prédéterminée,
**caractérisé en ce que** lors du démarrage de l'entraînement du moteur-générateur (4), l'unité de commande (6) démarre le moteur (2) et limite le couple du moteur-générateur (4) si la température de l'élément de commutation (53a, 53b, 53c, 54a, 54b, 54c) est égale ou supérieure à une deuxième température prédéterminée supérieure à la première température prédéterminée.

2. Dispositif de commande pour le véhicule hybride (1) selon la revendication 1, dans lequel lors du démarrage du fonctionnement du véhicule hybride (1) à l'aide du moteur-générateur (4), l'unité de commande (6) amène le véhicule hybride (1) à commencer à fonctionner à l'aide du moteur (2) en tant que source d'entraînement si la température de l'élément de commutation (53a, 53b, 53c, 54a, 54b, 54c) est égale ou supérieure à la température prédéterminée.

3. Dispositif de commande pour le véhicule hybride (1) selon la revendication 1, dans lequel lors du démarrage de la décélération du véhicule hybride (1) à l'aide du moteur-générateur (4), l'unité de commande (6) amène le véhicule hybride (1) à fonctionner à l'aide du moteur (2) en tant que source d'entraînement si la température de l'élément de commutation (53a, 53b, 53c, 54a, 54b, 54c) est égale ou supérieure à la température prédéterminée.

4. Dispositif de commande pour le véhicule hybride (1) selon l'une quelconque des revendications 1 à 3, dans lequel lors du démarrage de l'entraînement du moteur-générateur (4), l'unité de commande (6) démarre le moteur (2) si un état dans lequel la température de l'élément de commutation (53a, 53b, 53c, 54a, 54b, 54c) est égale ou supérieure à la température prédéterminée se poursuit jusqu'à ce qu'une vitesse de rotation du moteur-générateur (4) atteigne ou dépasse une vitesse de rotation prédéterminée.
